# EUROPÄISCHE PATENTSCHRIFT

(11) **EP 1 183 477 B1**
(45) Veröffentlichungstag und Bekanntmachung des Hinweises auf die Patenterteilung: **16.02.2005**
(21) Anmeldenummer: 00926939.0
(22) Anmeldetag: 14.04.2000
(51) Int. Cl.: F16D 65/56

(54) **VERSCHLEISSNACHSTELLEINRICHTUNG FÜR EINE BREMSE**
WEAR ADJUSTMENT DEVICE FOR A BRAKE
DISPOSITIF DE RATTRAPAGE D'USURE DES GARNITURES DE FREINS

(30) Priorität: 21.05.1999 DE 19923457
(43) Veröffentlichungstag der Anmeldung: 06.03.2002
(73) Patentinhaber: KNORR-BREMSE SYSTEME FÜR NUTZFAHRZEUGE GMBH, 80809 München (DE)
(72) Erfinder: THEISS, Armin, D-94151 Mauth/Heinrichsbrunn (DE); IRASCHKO, Johann, D-85301 Schweitenkirchen (DE); BAUMGARTNER, Hans, D-85368 Moosburg (DE)
(86) Internationale Anmeldenummer: PCT/EP2000/003393
(87) Internationale Veröffentlichungsnummer: WO 2000/071906

(56) Entgegenhaltungen:
- EP-A- 0 566 008
- DE-A- 19 632 917

## Beschreibung

Die vorliegende Erfindung betrifft eine Verschleißnachstelleinrichtung für eine Bremse, insbesondere eine Kraftfahrzeugbremse mit einer in einem Gehäuse, insbesondere einem Bremssattel, gelagerten und an einem stirnseitigen Ende von außen zugänglichen Justierwelle, die im zugänglichen Bereich mit einem eine Drehmomentübertragung ermöglichenden Kopfteil ausgestattet ist.

Bremsen mit einer Verschleißnachstelleinrichtung der gattungsgemäßen Art sind an sich bekannt.

Eine derartige Verschleißnachstelleinrichtung stellt sicher, daß das Lüftspiel über die gesamte Nutzdauer hinweg nahezu gleichbleibend ist, was erreicht wird durch eine Selbstnachstellung der auf eine Bremsscheibe einwirkenden Bremsbeläge bei entsprechender Abnutzung.

Ist der Bremsbelag weitestgehend verbraucht, wird zur Vermeidung eines Bremsenausfalles ein neuer Bremsbelag eingebaut. Hierzu kann ein Wartungsmechaniker die Justierspindel wieder in ihre Ausgangslage zurückbringen, um ausreichend Platz für einen neuen Bremsbelag zu schaffen.

Die Justierspindel kann lediglich bis gegen einen Endanschlag zurückgedreht werden, so daß die Gefahr besteht, daß ein Wartungsmechaniker unbeabsichtigt versucht, die Justierspindel trotz Erreichen des Endanschlages weiter zu drehen. Dies kann zu Beschädigungen und zur Zerstörung der Nachstelleinrichtung führen.

Um diese Gefahr zu beseitigen, sind bereits grundsätzlich in die richtige Richtung weisende Vorschläge gemacht worden.

So ist es beispielsweise aus der EP 0 566 008 B1 bekannt, die Justierwelle mit einer bei einem bestimmten Grenz-Drehmoment ansprechenden Trenneinrichtung, insbesondere auch in Form einer Sollbruchstelle, auszustatten, durch die bei Überschreitung eines zulässigen Grenz-Drehmomentes ein Abscheren des äußeren, stirnseitigen Kopfbereiches der Justierwelle erfolgt.

Damit wird zwar eine Überlastung und Beschädigung der Nachstelleinrichtung und der Bremse sicher verhindert, gleichzeitig wird aber auch die Justierwelle insgesamt unbrauchbar gemacht.

Der DE 196 32 917 A1 ist der Vorschlag zu entnehmen, die Justierwelle mit einem drehmomentübertragenden Element auszustatten, welches zur Verhinderung der Übertragung eines unerwünscht großen Drehmomentes auf die Welle deformierbar sein soll.

Der vorliegenden Erfindung liegt die Aufgabe zugrunde, eine Verschleißnachstelleinrichtung der gattungsgemäßen Art so zu gestalten, daß eine Begrenzung des auf die Justierwelle übertragbaren Drehmomentes möglich wird, ohne daß die Justierwelle dabei selbst beschädigt oder zerstört wird, wobei gleichzeitig sichergestellt ist, daß das maximal auf die Justierwelle übertragbare Drehmoment exakter bestimmbar ist.

Diese Aufgabe wird erfindungsgemäß dadurch gelöst, daß bei einer gattungsgemäßen Verschleißnachstelleinrichtung das Kopfteil als separates Bauteil ausgebildet und in Achsrichtung der Justierwelle sowie gegenüber der Justierwelle verdrehsicher mittelbar oder unmittelbar mit dieser koppelbar ist und mit einer Sollbruchstelle ausgestattet ist, die bei Überschreitung eines maximal zulässigen Drehmomentes zu einer Abscherung des mit der Justierwelle gekoppelten Abschnittes gegenüber dem der Justierwelle abgewandten Abschnittes führt.

Mit der vorliegenden Erfindung wird einerseits der Nachteil der Zerstörung oder Beschädigung der Justierwelle im Falle des Aufbringens eines unzulässig hohen Drehmomentes vermieden, andererseits aber auch erreicht, daß das zur Abscherung führende maximal zulässige Drehmoment in engen Grenzen vorherbestimmbar ist, da die Gestaltung des Kopfteiles mit seiner Sollbruchstelle sowohl rechnerisch wie auch konstruktiv sehr präzise auf die Übertragbarkeit eines maximal zulässigen Drehmomentes ausgelegt werden kann.

Letzteres ist bei einem auf eine reine Materialdeformierung ausgelegte Konstruktion bei weitem nicht mit dieser Präzision erreichbar.

Die Sollbruchstelle wird, was konstruktiv ebenso wie fertigungstechnisch besonders einfach ist, durch eine umlaufende Nut des Kopfteiles gebildet.

Dabei ist es bevorzugt, die Nut als Kerbnut mit einem etwa U-förmigen Querschnitt auszubilden.

Weitere Merkmale sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: einen Längsschnitt durch eine erfindungsgemäße Verschleißnachstelleinrichtung einer Bremse,
- Figur 2: den Kopfbereich einer Justierwelle einer Verschleißnachstelleinrichtung einer Bremse nach einem weiteren Ausführungsbeispiel der Erfindung.

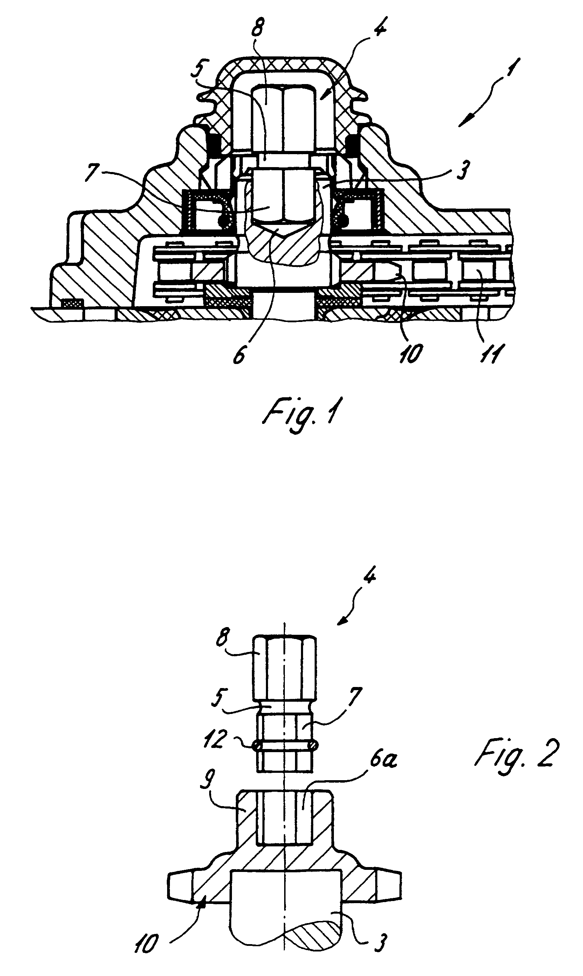

In Figur 1 ist mit dem Bezugszeichen 1 insgesamt eine Verschleißnachstelleinrichtung für eine nicht weiter dargestellte Bremse, insbesondere eine Kraftfahrzeugbremse, bezeichnet, die mit einer in einem Gehäuse 2, vorzugsweise einem Bremssattel, gelagerte und an einem stirnseitigen Ende von außen zugängliche Justierwelle 3 aufweist, die im zugänglichen Bereich mit einem eine Drehmomentübertragung ermöglichenden Kopfteil 4 ausgestattet ist.

Der komplette Aufbau einer Bremse, insbesondere einer Kraftfahrzeugbremse, mit einer Verschleißnachstelleinrichtung 1 mit diesem grundsätzlichen Aufbau ergibt sich eindeutig aus der EP 0 566 008 B1, auf die hier ausdrücklich Bezug genommen wird. Aus der vorgenannten Literaturstelle ergibt sich auch die bekannte Wirkungsweise einer derartigen Verschleißnachstelleinrichtung 1, so daß unter Bezugnahme auf den diesbezüglichen Offenbarungsgehalt der EP 0 566 008 B1 auf eine ausführliche Be schreibung und detaillierte Darstellung an dieser Stelle verzichtet werden kann, da es im Zusammenhang mit der vorliegenden Erfindung ausschließlich um konstruktive Merkmale geht, die darauf abzielen, eine Beschädigung oder Zerstörung der für den sicheren Betrieb einer Bremse notwendigen Teile zu verhindern, wenn die Justierspindel 3 zum Zwecke des Auswechselns von Bremsbacken in ihre Ausgangsstellung zurückgedreht werden muß. Dabei soll eine Konstruktion verwirklicht werden, die äußerst praxisgerecht und preiswert ist, insbesondere auch unter Service-Gesichtspunkten.

Um dieses angestrebte Ziel zu erreichen, ist das für die Betätigung der Justierwelle 3 vorgesehene Kopfteil 4 als separates Bauteil ausgebildet und mit einer Sollbruchstelle 5 ausgestattet. Das als separates Bauteil ausgebildete Kopfteil 4 ist gegenüber der Justierwelle 3 verdrehsicher mit der Justierwelle 3 koppelbar.

Zu diesem Zweck ist beim Ausführungsbeispiel gemäß Figur 1 die Justierwelle 3 an ihrem dem Kopfteil 4 zugewandten Ende mit einer Mehrkantausnehmung 6 - den Innensechskant einer Schraube ähnlich - und das bolzenförmige Kopfteil 4 mit einem im Querschnitt angepaßten Ansatz 7 versehen. Dieser Ansatz 7 ermöglicht das verdrehsichere Einstecken des Kopfteiles 4 in die Mehrkantausnehmung 6 der Justierwelle 3. Selbstverständlich kann eine verdrehsichere Kopplung des Kopfteiles 4 mit der Justierwelle 4 auch durch geometrisch beliebig andere Gestaltungen der Ausnehmung 6 einerseits sowie des Ansatzes 7 andererseits erreicht werden, so können beispielsweise die Ausnehmung 6 und der Ansatz 7 neben mehrkantigen Ausführungen z. B. Vielnutprofil auch zahnförmig sowie - ganz allgemein gesagt - auch beliebig unrund ausgebildet sein. Entscheidend ist hier lediglich, daß eine Form gewählt wird, die ein Verdrehen des Ansatzes 7 innerhalb der Ausnehmung 6 verhindert.

Bevorzugt ist eine Querschnittsform der Ausnehmung 6 sowie des Ansatzes 7, die das Einsetzen eines handelsüblichen Schraubwerkzeuges in die Ausnehmung 6 unmöglich macht, um auf diese Art und Weise eine unerlaubte, unmittelbare Betätigung der Justierwelle beispielsweise mittels eines Imbusschlüssels zu verhindern.

Das Kopfteil 4 ist im Bereich seines der Justierwelle 3 abgewandt liegenden freien Endes mit einem weiteren, eine Drehmomentübertragung ermöglichenden Ansatz 8 ausgestattet, der vorteilhafterweise die Querschnittsform eines handelsüblichen Schraubwerkzeuges aufweist, beispielsweise die Form eines Vier- oder eines Sechskantes.

Alternativ hierzu kann der Ansatz 8 selbstverständlich auch mit einer vier- oder sechskantförmigen Ausnehmung - z. B. Innensechskant nach DIN - zum Einstecken eines entsprechenden Schraubwerkzeuges ausgestattet sein.

Die Sollbruchstelle 5 weist die Form einer umlaufenden Nut auf, die eine Querschnittsverengung des gesamten Kopfteiles 4 darstellt. Durch diese Querschnittsverengung kann konstruktiv vorherbestimmt werden, bei welchem Drehmoment das Kopfteil 4 abgeschert wird, wobei dieses Drehmoment so gewählt wird, daß eine Beschädigung oder Zerstörung der für die Bremse wesentlichen Funktionsteile sowie der gesamten Verschleißnachstelleinrichtung 1 verhindert wird.

Im dargestellten Ausführungsbeispiel ist die Sollbruchstelle 5 in Form einer im Querschnitt U-förmigen Nut ausgebildet. Hier sind selbstverständlich auch andere Nutformen denkbar, z. B. kann auch eine halbkreisförmige Nut vorgesehen werden oder eine Nut mit V-förmigem Querschnitt. Um ein möglichst exaktes Abdrehmoment einhalten zu können, hat sich ein Querschnitt mit ausgeprägten Kanten, beispielsweise rechteckig, als günstig erwiesen.

Denkbar ist auch eine Gestaltung des Kopfteiles 4 derart, daß zwischen dem mit der Justierwelle 3 koppelbaren Ansatz 7 und dem für das Ansetzen eines Schraubwerkzeuges vorgesehenen Ansatz 8 ein stufiger Querschnittsübergang vorgesehen ist, durch den die Sollbruchstelle bestimmt wird. Im Bereich dieses stufigen Überganges kann zusätzlich eine umlaufende Nut vorgesehen werden, die dann beispielsweise auch wieder einen etwa V-förmigen Querschnitt aufweisen kann.

Sofern das Kopfteil 4 ständig in Kontakt mit der Justierwelle 3 verbleiben soll, ist es vorteilhaft, zumindest eine reibschlüssige, axiale Verbindung zwischen dem Kopfteil 4 und der Justierwelle 3 vorzusehen.

Es ist aber auch denkbar, das Kopfteil 4 lediglich dann auf die Justierwelle 3 aufzusetzen, wenn - für den Fall eines erforderlichen Bremsbelagwechsels - die Justierwelle 3 in ihre Ausgangslage zurückgedreht werden soll.

Wird bei diesem Vorgang dann ein unzulässig hohes Drehmoment auf das Kopfteil 4 ausgeübt, so führt dies zu einem Abscheren des oberen Ansatzes 8 gegenüber dem unteren Ansatz 7 und somit lediglich zu einer Zerstörung des Kopfteiles 4, wohingegen alle wesentlichen Bauteile der Bremse mechanisch unbeschädigt und somit voll funktionstüchtig bleiben. In diesem Falle ist es dann lediglich erforderlich, das Kopfteil 4 durch ein neues, intaktes Kopfteil 4 zu ersetzen.

In Figur 2 ist angedeutet, daß das Kopfteil 4 nicht nur unmittelbar in die Justierwelle 3, sondern alternativ hierzu auch in eine Ausnehmung 6a einer halsförmigen Verlängerung 9 eines Kettenrades 10 eingesetzt werden kann, welches seinerseits mit der Justierwelle 3 in beliebiger Weise fest und verdrehsicher verbunden ist. Ein derartiges Kettenrad 10 ist auch bei der Konstruktion gemäß Figur 1 vorgesehen und dient zum Antrieb einer Kette 11, über die eine Synchronisierung der Drehbewegung der Justierwelle 3 zu einer achsparallel hierzu verlaufenden weiteren Welle führt. Auch diese prinzipielle Konstruktion der Synchronisierung ist bereits bekannt und in der schon mehrfach erwähnten EP 0 566 008 B1 dargestellt und beschrieben.

Auch die Ausnehmung 6a im Bereich der halsförmigen Verlängerung 9 des Kettenrades 10 ist vorzugsweise wie beim Ausführungsbeispiel gemäß Figur 1 mit einem Querschnitt ausgestattet, der das Einsetzen eines handelsüblichen Schraubwerkzeuges unmöglich macht. Entsprechend ist der Querschnitt des Ansatzes 7 des Kopfteiles 4 gestaltet. Der zur Betätigung des Kopfteiles 4 sowie der Justierwelle 3 vorgesehene, obere Ansatz 8 des Kopfteiles 4 ist wiederum mit einem mehrkantigen Querschnitt - entsprechend handelsüblicher Schraubwerkzeuge - versehen.

Beim Ausführungsbeispiel gemäß Figur 2 ist auch dargestellt, daß die die Sollbruchstelle 5 bildende Nut einen halbkreisförmigen Querschnitt aufweisen kann.

Der in die Ausnehmung 6a der halsförmigen Verlängerung 9 des Kettenrades 10 eingreifende, untere Ansatz 7 ist mit einem Federring 12 zur axialen Sicherung des Kopfteiles 4 gegenüber dem Kettenrad 10 ausgestattet.

Die vorliegende Erfindung basiert insgesamt auf dem grundsätzlichen Gedanken, für die Verdrehung der Justierwelle 3 ein separates Kopfteil 4 zu verwenden, welches bei Überschreitung eines vorgegebenen Drehmomentes völlig abgeschert und somit mechanisch zerstört wird, wodurch im Gegensatz beispielsweise zur DE 196 32 917 A1 eine relativ einfachere Konstruktion und auch eine unterschiedliche Funktion erreicht wird, da die Überlastsicherung bei der Konstruktion nach der DE 196 32 917 A1 letztendlich auf mechanischer Verformung, gegebenenfalls auch im elastischen Bereich, in den Grenzen der Hook'schen Geraden, basiert.

Das Kopfteil 4 der erfindungsgemäßen Konstruktion kann prinzipiell aus allen geeigneten Materialien hergestellt sein, bevorzugt ist aber dessen Herstellung aus Metall.

### Bezugszeichenliste

- 1 =: Verschleißnachstelleinrichtung
- 2 =: Gehäuse
- 3 =: Justierwelle
- 4 =: Kopfteil
- 5 =: Sollbruchstelle
- 6 =: Ausnehmung
- 6a =: Ausnehmung
- 7 =: Ansatz
- 8 =: Ansatz
- 9 =: halsförmige Verlängerung
- 10 =: Kettenrad
- 11 =: Kette
- 12 =: Federring

## Patentansprüche

1. Verschleißnachstelleinrichtung (1) für eine Bremse, insbesondere eine Kraftfahrzeugbremse, mit einer in einem Gehäuse (2), insbesondere einem Bremssattel, gelagerten und an einem stirnseitigen Ende von außen zugänglichen Justierwelle (3), die im zugänglichen Bereich mit einem eine Drehmomentübertragung ermöglichenden Kopfteil (4) ausgestattet ist, **dadurch gekennzeichnet, daß** das Kopfteil (4) als separates Bauteil ausgebildet und in Achsrichtung der Justierwelle (3) sowie gegenüber der Justierwelle (3) verdrehsicher mittelbar oder unmittelbar mit dieser koppelbar ist und mit einer Sollbruchstelle (5) ausgestattet ist, die bei Überschreitung eines maximal zulässigen Drehmomentes zu einer Abscherung des mit der Justierwelle (3) gekoppelten Abschnittes gegenüber dem der Justierwelle (3) abgewandten Abschnittes führt.

2. Verschleißnachstelteinrichtung nach Anspruch 1, **dadurch gekennzeichnet, daß** die Sollbruchstelle (5) durch eine umlaufende Nut des Kopfteiles (4) gebildet ist.

3. Verschleißnachstelleinrichtung nach Anspruch 2, **dadurch gekennzeichnet, daß** die Nut als Kerbnut mit einem etwa U-förmigen Querschnitt ausgebildet ist.

4. Verschleißnachstelleinrichtung nach Anspruch 1, **dadurch gekennzeichnet, daß** die Sollbruchstelle (5) durch einen stufigen Querschnittsübergang des Kopfteiles (4) gebildet ist.

5. Verschleißnachstelleinrichtung nach Anspruch 4, **dadurch gekennzeichnet, daß** im stufigen Übergangsbereich zusätzlich eine umlaufende Nut vorgesehen ist.

6. Verschleißnachstelleinrichtung nach Anspruch 5, **dadurch gekennzeichnet, daß** die Nut einen etwa V-förmigen Querschnitt aufweist.

7. Verschleißnachstelleinrichtung nach einem der vorhergehenden Ansprüche, **dadurch gekennzeichnet, daß** das Kopfteil (4) im Kopplungsbereich zur Justierwelle (3) mit einem eine Drehmomentübertragung ermöglichenden Ansatz (7) und das kopfseitige Ende der Justierwelle (3) mit einer entsprechenden Ausnehmung (6) versehen ist.

8. Verschleißnachstelleinrichtung nach Anspruch 7, **dadurch gekennzeichnet, daß** der Querschnitt des Ansatzes (7) und der Ausnehmung (6) von der Querschnittsform handelsüblicher Schraubwerkzeuge abweichend ausgebildet sind.

9. Verschleißnachstelleinrichtung nach einem der vorhergehenden Ansprüche, **dadurch gekennzeichnet, daß** das Kopfteil (4) an seinem der Justierwelle (3) abgewandt liegenden freien Ende mit einem eine Drehmomentübertragung ermöglichenden Ansatz (8) oder einer entsprechenden Ausnehmung versehen ist, wobei der Querschnitt des Ansatzes (8) oder der Ausnehmung dem Querschnitt handelsüblicher Schraubwerkzeuge entspricht und beispielsweise vier- oder sechskantig ist.

10. Verschleißnachstelleinrichtung nach einem oder mehreren der vorhergehenden Ansprüche, **dadurch gekennzeichnet, daß** das Kopfteil (4) mit einem fest auf dem stirnseitigen Ende der Justierwelle (3) angebrachten Kettenrad (10) bzw. Kettenritzel koppelbar ist.

11. Verschleißnachstelleinrichtung nach Anspruch 10, **dadurch gekennzeichnet, daß** das Kettenrad (10) oder Kettenritzel eine halsförmige Verlängerung (9) aufweist, in der eine eine Drehmomentübertragung ermöglichende Querschnittsform aufweisende Ausnehmung (6a) vorgesehen ist, innerhalb derer ein mit entsprechendem Querschnitt versehener Ansatz (7) des Kopfteiles (4) mittelbar mit der Justierwelle (3) koppelbar ist.

12. Verschleißnachstelleinrichtung nach einem oder mehreren der vorhergehenden Ansprüche, **dadurch gekennzeichnet, daß** der mit der Justierwelle (3) unmittelbar oder über das mit der Justierwelle (3) verbundene Kettenrad (10) mittelbar koppelbare Ansatz (7) des Kopfteiles (4) in axialer Richtung reibschlüssig festlegbar ist.

13. Verschleißnachstelleinrichtung nach einem oder mehreren der vorhergehenden Ansprüche, **dadurch gekennzeichnet, daß** das Kopfteil (4) einstückig aus Metall hergestellt ist.

## Claims

1. Wear adjustment device (1) for a brake, in particular a motor vehicle brake, with an adjusting shaft (3), in particular a caliper, mounted in a housing (2) and accessible from the outside at a front end, which is fitted with a head part (4) enabling a torque to be transmitted in the accessible region, **characterised in that** the head part (4) is provided as a separate component and can be indirectly or directly coupled with the adjusting shaft (3) to prevent it from turning in the axial direction of the adjusting shaft (3) and relative to it, and is provided with a predetermined breaking point (5) which causes the portion coupled with the adjusting shaft (3) to snap off from the portion remote from the adjusting shaft (3) when a maximum permissible torque is exceeded.

2. Wear adjustment device as claimed in claim 1, **characterised in that** the predetermined breaking point (5) is provided in the form of a circumferential groove of the head part (4).

3. Wear adjustment device as claimed in claim 2, **characterised in that** the groove is a notched groove with a substantially U-shaped cross-section.

4. Wear adjustment device as claimed in claim 1, **characterised in that** the predetermined breaking point (5) is a stepped cross-sectional transition of the head part (4).

5. Wear adjustment device as claimed in claim 4, **characterised in that** a circumferential groove is additionally provided in the stepped transition region.

6. Wear adjustment device as claimed in claim 5, **characterised in that** the groove has a substantially V-shaped cross-section.

7. Wear adjustment device as claimed in one of the preceding claims, **characterised in that** the head part (4) is provided with a shoulder (7) in the coupling region with the adjusting shaft (3) enabling a torque to be transmitted and the head-side end of the adjusting shaft (3) is provided with a matching recess (6).

8. Wear adjustment device as claimed in claim 7, **characterised in that** the cross-section of the shoulder (7) and the recess (6) are different from the cross-sectional shape of standard screwing tools.

9. Wear adjustment device as claimed in one of the preceding claims, **characterised in that**, at its end remote from the adjusting shaft (3) which lies free, the head part (4) is provided with a shoulder (8) or a matching recess, the cross-section of the shoulder (8) or recess matching the cross-section of standard screwing tools and being square or hexagonal, for example.

10. Wear adjustment device as claimed in one or more of the preceding claims, **characterised in that** the head part (4) can be coupled with a chain wheel (10) or pinion wheel fixedly mounted on the terminal-face end of the adjusting shaft (3).

11. Wear adjustment device as claimed in claim 10, **characterised in that** the chain wheel (10) or pinion wheel has a neck-shaped extension (9), which has a recess (6a) in it of a shape enabling a torque to be transmitted, inside which a shoulder (7) of the head part (4) with a matching cross-section can be indirectly coupled with the adjusting shaft (3).

12. Wear adjustment device as claimed in one or more of the preceding claims, **characterised in that** the chain wheel (10), which can be directly coupled with the adjusting shaft (3) or shoulder (7) of the head part (4) so that it can be indirectly coupled with the adjusting shaft (3), can be fixed in a friction lock in the axial direction.

13. Wear adjustment device as claimed in one or more of the preceding claims, **characterised in that** the head part (4) is a single piece made from metal.

## Revendications

1. Dispositif (1) de rattrapage d'usure pour un frein, en particulier un frein de véhicule automobile, comportant un arbre (3) d'ajustement monté dans un boîtier (2), notamment dans un étrier de frein, et accessible de l'extérieur à une extrémité frontale, arbre qui est équipé dans la région accessible d'une partie (4) de tête permettant une transmission de couple de rotation, **caractérisé en ce que** la partie (4) de tête est réalisée sous la forme d'une pièce distincte et peut être couplée indirectement ou indirectement à l'arbre (3) d'ajustement dans la direction axiale de l'arbre (3) d'ajustement et avec blocage en rotation par rapport à l'arbre (3) d'ajustement, et elle est équipée d'un point (5) de rupture privilégiée qui, en cas de dépassement d'un couple maximal admissible, engendre un cisaillement de la partie couplée à l'arbre (3) d'ajustement par rapport à la partie éloignée de l'arbre (3) d'ajustement.

2. Dispositif de rattrapage d'usure suivant la revendication 1, **caractérisé en ce que** le point (5) de rupture privilégiée est formé par une rainure entourante de la partie (4) de tête.

3. Dispositif de rattrapage d'usure suivant la revendication 2, **caractérisé en ce que** la rainure est réalisée sous forme de rainure entaillée ayant une section approximativement en forme de U.

4. Dispositif de rattrapage d'usure suivant la revendication 1, **caractérisé en ce que** le point (5) de rupture privilégiée est formé par une transition de section en gradin de la partie (4) de tête.

5. Dispositif de rattrapage d'usure suivant la revendication 4, **caractérisé en ce qu'**une rainure entourante est en outre prévue dans la transition de section en gradin.

6. Dispositif de rattrapage d'usure suivant la revendication 5, **caractérisé en ce que** la rainure a une section approximativement en forme de V.

7. Dispositif de rattrapage d'usure suivant l'une des revendications précédentes, **caractérisé en ce que** la partie (4) de tête est pourvue, dans la région de couplage avec l'arbre (3) d'ajustement, d'un embout (7) permettant une transmission de couple, et l'extrémité de tête de l'arbre (3) d'ajustement est pourvu d'un évidement (6) correspondant.

8. Dispositif de rattrapage d'usure suivant la revendication 7, **caractérisé en ce que** la section de l'embout (7) et celle de l'évidement (6) sont réalisées différentes de la forme de section d'outils de vissage de type courant.

9. Dispositif de rattrapage d'usure suivant l'une des revendications précédentes, **caractérisé en ce que** la partie (4) de tête est pourvue, à son extrémité libre située à l'opposé de l'arbre (3) d'ajustement, d'un embout (8) permettant une transmission de couple ou d'un évidement correspondant, la section de l'embout (8) ou de l'évidement correspondant à la section d'outils de vissage de type courant et étant par exemple carrée ou hexagonale.

10. Dispositif de rattrapage d'usure suivant une ou plusieurs des revendications précédentes, **caractérisé en ce que** la partie (4) de tête peut être couplée à une roue (10) à chaîne ou un pignon à chaîne fixement monté(e) sur l'extrémité frontale de l'arbre (3) d'ajustement.

11. Dispositif de rattrapage d'usure suivant la revendication 10, **caractérisé en ce que** la roue (10) à chaîne ou le pignon à chaîne comporte un prolongement (9) en forme de collet dans lequel est prévu un évidement (6a) ayant une forme de section permettant une transmission de couple, évidement à l'intérieur duquel un embout (7), doté d'une section correspondante, de la partie (4) de tête peut être couplé indirectement à l'arbre (3) d'ajustement.

12. Dispositif de rattrapage d'usure suivant une ou plusieurs des revendications précédentes, **caractérisé en ce que** l'embout (7) - qui peut être couplé à l'arbre (3) d'ajustement directement ou indirectement par l'intermédiaire de la roue (10) à chaîne assemblée à l'arbre (3) d'ajustement - peut être immobilisé en direction axiale par friction.

13. Dispositif de rattrapage d'usure suivant une ou plusieurs des revendications précédentes, **caractérisé en ce que** la partie (4) de tête est fabriquée d'un seul tenant en métal.
